# EUROPEAN PATENT APPLICATION

(11) **EP 4 390 442 A1**
(43) Date of publication of application: **26.06.2024**
(21) Application number: 22216047.5
(22) Date of filing: 22.12.2022
(51) Int. Cl.: G01S 7/48, G01S 17/42, G01S 17/86, G01S 17/89

(54) **METHOD FOR REDUCING AN AMOUNT OF DATA REPRESENTING A LIDAR MEASUREMENT AND A MONITORING DEVICE IMPLEMENTING THE METHOD**

(71) Applicant: Axis AB, 223 69 Lund (SE)
(72) Inventor: Yuan, Song, 223 69 LUND (SE); Murstam, Mikael, 223 69 LUND (SE)
(74) Representative: AWA Sweden AB

(57) **Abstract**

The present invention relates to a d method for reducing an amount of data representing a LIDAR measurement. The method comprising: providing the LIDAR measurement as a 3D point cloud representation; fitting a line to a portion of points in the 3D point cloud; and replacing the portion of points with a representation of the fitted line, thereby reducing the amount of data representing the LIDAR measurement. Also, a monitoring device comprising a LIDAR unit is disclosed. The monitoring device being configured to execute the method.

## Description

### Technical field

The present invention relates to a method for reducing an amount of data representing a light detection and ranging, LIDAR, measurement. The present invention also relates to a monitoring device comprising a LIDAR unit, the monitoring device being configured to implement the method.

### Background

The use of light detection and ranging, LIDAR measurements has been attracting a lot of attention lately. Use of this this technology for mapping the world around us have been implemented in for example cars and mobile devices such as smart phones. Using LIDAR, a distance mapping to objects in a field-of-view of a LIDAR unit can be made. The applicant has realized that LIDAR measurements can be exploited in monitoring devices configured to monitor a scene, e.g., for surveillance purposes. In such application of data representing the LIDAR measurement LIDAR is to be rendered into a 2D image/video representation so that a user can interpret the LIDAR data. However, rendering a 2D image/video representation of LIDAR data can be very computationally heavy. Hence, there is a need in reducing the processing power needed in rendering a 2D image/video representation of LIDAR data.

### Summary of the invention

It is an object to mitigate, alleviate or eliminate one or more of the aboveidentified deficiencies in the art and disadvantages singly or in any combination and solve at least the above-mentioned problem.

According to a first aspect a method for reducing an amount of data representing a LIDAR measurement is provided. The method comprising: providing the LIDAR measurement as a 3D point cloud representation; fitting a line to a portion of points in the 3D point cloud; and replacing the portion of points with a representation of the fitted line, thereby reducing the amount of data representing the LIDAR measurement.

Accordingly, a method is provided in which it is facilitated to reduce the amount of data representing a LIDAR measurement. This since data representing a plurality of points is replaced by a line fitted to the points. By reducing the amount of data representing a LIDAR measurement rendering of such data into an image will be less processing demanding. Especially, since graphics rendering units are typically rendering lines in a processing efficient manner.

The portion of points may comprise three or more points. Preferably, the portion of points comprises ten or more points. The more points being replaced by a representation of a fitted line the more data will be reduced.

Fitting the line may comprise fitting a straight line to the portion of points. If so, the representation of the fitted line may be in the form of a position vector and a length. Such representation of data is very bit conservative enabling a great reduction of data. Further, for a LIDAR measurement of a flat surface the points in the point cloud are expected to be distributed along a straight line. It is expected that a large part of a LIDAR frame of a monitored scene is representing flat areas, hence, it is to be expected that many portions of points of the LIDAR frame can be replaced by straight lines.

Alternatively, fitting the line may comprise fitting a spline to the portion of points. If so, the representation of the fitted line may be in the form of a spline function. Replacing the portion of points with a spline is an alternative way of reducing the data. Knowing the spline fitting to the portion of points a minimal amount of data necessary to draw the spline is needed to be saved, such data can typically be represented with much less bits than the data representing all of the points of the portion of points, thus saving data. Spline fitting will be particularly efficient for data representing a non-flat surface. Hence, the overall idea with replacing portion of points with a straight line or a spline is to reduce the data necessary to render a 2D image/video representation of LIDAR data. Generally, the line is to be fitted so that it runs through all the data points of the portion of points, or at least enough of them.

In connection with the fitting of a line to a portion of the points in the point cloud, the method may further comprise selecting the points of the portion of points as belonging to a specific scan line of a raster scan performed during the LIDAR measurement. By such selection it is safeguarded that the points are supposed to be representing a line, e.g., a flat surface (typically to be represented with a straight line) or a curved surface (typically to be represented by a spline).

The steps of fitting a line to a portion of points in the 3D point cloud and replacing the portion of points with a representation of the fitted line may be repeated for a plurality of portions of points. Preferably, the steps of fitting a line to a portion of points in the 3D point cloud and replacing the portion of points with a representation of the fitted line are repeated until all points within a data set representing a scan of LIDAR data for a full LIDAR frame has been processed.

The method may further comprise, after executing the steps of fitting a line to a portion of points in the 3D point cloud and replacing the portion of points with a representation of the fitted line one or more times, rendering the reduced data representing the light LIDAR measurement as an image comprising the fitted one or more lines. Such rendering is easier to perform, i.e., is consuming less processing power, than a rendering of the original point cloud. This since the amount of data to be processed in the rendering is reduced.

According to a second aspect, a non-transitory computer-readable storage medium is provided. The non-transitory computer-readable storage medium having stored thereon instructions for implementing the method according to the first aspect when executed on a device having processing capabilities.

According to a third aspect, a monitoring device is provided. The monitoring device comprising: a LIDAR unit and circuitry. The LIDAR unit is configured to measure LIDAR data represented as a 3D point cloud. The circuitry is configured to execute a fitting function and a data reduction function. The fitting function is configured to fit a line to a portion of points in the 3D point cloud. The data reduction function is configured to replace the portion of points with a representation of the fitted line. Thereby an amount of data in the LIDAR data can be reduced.

The circuitry may further be configured to execute an image rendering function configured to render an image based on the LIDAR data after execution of the fitting function and the data reduction function.

The fitting function may be configured to fit a straight line to the portion of points in the 3D point cloud. If so, the data reduction function may be configured to replace the portion of points with a position vector and a length.

The fitting function may be configured to fit a spline to the portion of points in the 3D point cloud. If so, the data reduction function may be configured to replace the portion of points with a representation of the fitted line in the form of a spline function.

The circuitry may further be configured to execute a selection function configured to select the points of a portion of points as being points belonging to a specific scan line in a raster scan of a LIDAR frame.

The monitoring device may further comprise an encoder configured to encoder a video, represented by a plurality of images rendered by the image rendering function, into an encoded video stream.

The monitoring device may further comprise a camera unit configured to capture a video. The camera unit may have a field-of-view overlapping with a field-of-view for the LIDAR unit. The image rendering function may be configured to fuse data from the camera unit and the LIDAR unit into a fused LIDAR/visual image representation.

The above-mentioned features of the method, when applicable, apply to the second and third aspects as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the system described or acts of the methods described as such system and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings does not exclude other elements or steps.

### Brief description of the drawings

The above and other aspects of the present invention will now be described in more detail, with reference to appended figures. The figures should not be considered limiting; instead, they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrates a monitoring device comprising a LIDAR unit.
Fig. 2A is an image representation of a space captured by an image sensor of a monitoring device.
Fig. 2B is a 2D representation in the form of an image of a 3D point cloud measured by the LIDAR unit set to measure the space depicted in Fig. 1.
Fig. 3 schematically illustrates four scan lines in a LIDAR frame with lines fitted to one of the scan lines in the LIDAR frame.
Fig. 4 is a 2D representation of a portion of the scene as in Fig. 2B after the method for reducing an amount of data representing a LIDAR measurement discussed in this disclosure have been applied to the data illustrated in Fig. 2B.
Fig. 5 is a block diagram of a method for reducing an amount of data in a LIDAR measurement represented as a 3D point cloud.

### Detailed description

The present invention will now be described more fully hereinafter with reference to the accompanying drawings, in which currently preferred embodiments of the invention are shown. This invention may, however, be embodied in many different forms.

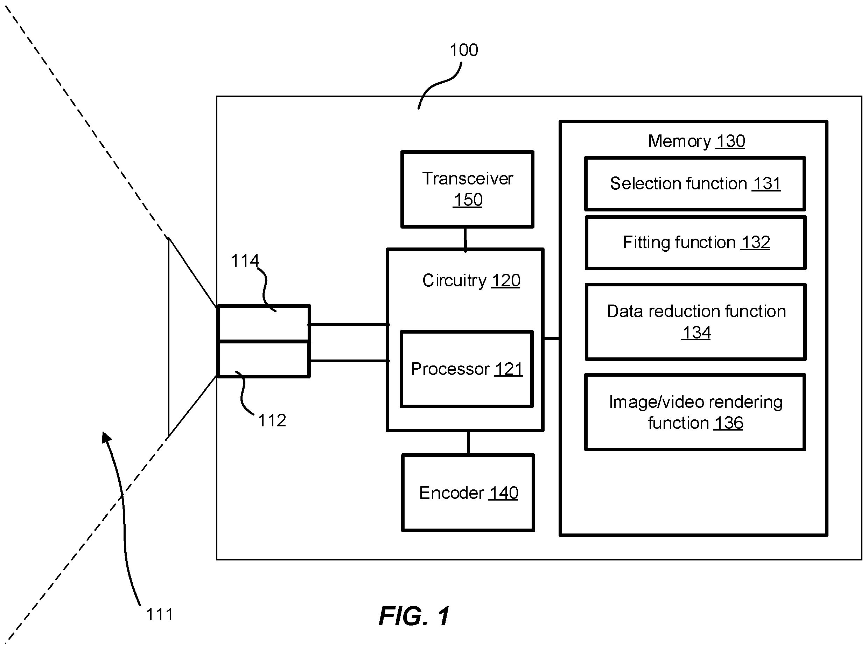

Fig. 1 illustrates a monitoring device 100. The monitoring device 100 is configured to monitor a scene, e.g., for surveillance purposes. The monitoring device 100 comprises a light detection and ranging, LIDAR, unit 112. The LIDAR unit 112 is configured to capture LIDAR data. As readily known by the skilled person a LIDAR unit 112 is configured to determine a distance to an object by recording a travel time from emission of a laser pulse to detection of a, from the object, backscattered pulse and using the speed of light to calculate the distance traveled. Many such measurements made within a frame period constitute a LIDAR frame. According to one example, the LIDAR unit 112 can produce 500 000 measurements per second. The LIDAR frames per second, fps, the LIDAR unit 112 then can produce is inversely proportional to the number of measurements per frame. Hence, configuring the LIDAR-unit 112 to run at 10 fps, then each LIDAR frame will contain 50 000 measurements. It is however to be understood that the LIDAR-unit 112 can be configured to run at alternative fps, such as within the range of 1-30 fps. Hence, the number of data points in a LIDAR frame is typically influenced on the fps. The measurements constituting a LIDAR frame is typically made as a raster scan comprising a plurality of scan lines. That is, the LIDAR unit 112 is typically configured to illuminate a field-of-view 111 point-by-point.

The monitoring device 100 further comprises circuitry 120. The circuitry 120 is configured to carry out overall control of functions and operations of the monitoring device 100. The circuitry 120 may include a processor 121, such as a central processing unit, CPU, a graphics processing unit, GPU, a microcontroller, or a microprocessor. The processor 121 is configured to execute program code stored in a memory 130, in order to carry out functions and operations of the monitoring device 100.

The memory 130 may be one or more of a buffer, a flash memory, a hard drive, a removable medium, a volatile memory, a non-volatile memory, a random access memory, RAM, or another suitable memory unit. In a typical arrangement, the memory 130 may include a non-volatile memory for long term data storage and a volatile memory that functions as system memory for the circuitry 120. The memory 130 may exchange data with the circuitry 120 over a data bus. Accompanying control lines and an address bus between the memory 130 and the circuitry 120 also may be present.

Functions and operations of the monitoring device 100 may be embodied in the form of executable logic routines (e.g., lines of code, software programs, etc.) that are stored on a non-transitory computer readable medium (e.g., the memory 130) of the device 100 and are executed by the circuitry 120 (e.g., using the processor 121). Furthermore, the functions and operations of the monitoring device 100 may be a stand-alone software application or form a part of a software application that carries out additional tasks related to the monitoring device 100. The described functions and operations may be considered a method that the corresponding part of the device is configured to carry out. Also, while the described functions and operations may be implemented in software, such functionality may as well be carried out via dedicated hardware or firmware, or some combination of hardware, firmware and/or software.

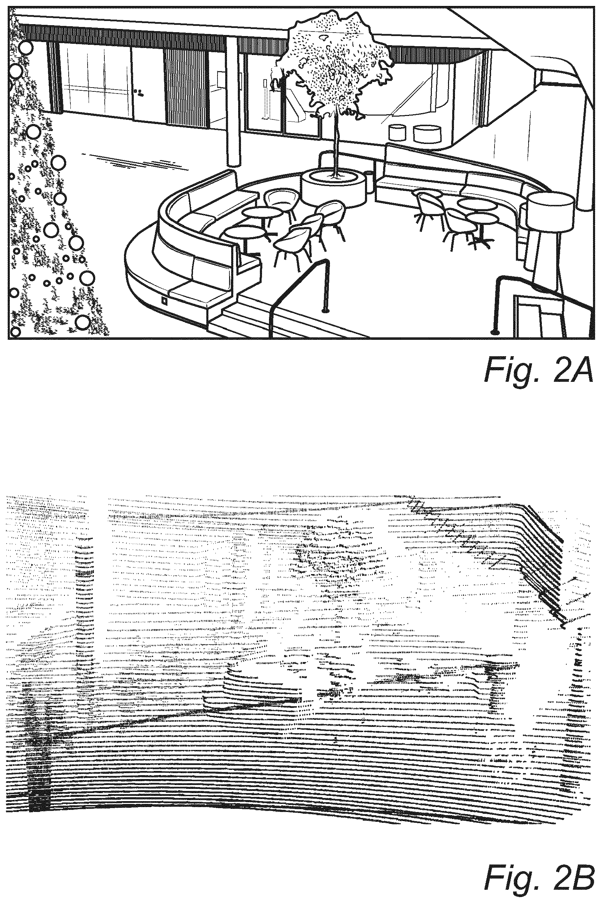

Fig 2A is an image representation of a space captured by an image sensor of a monitoring device. In Fig. 2B a 2D representation in the form of an image of such a 3D point cloud is illustrated. The 2D representation in Fig. 2B depicts the same space as the image of Fig. 2A. The LIDAR unit 112 is configured to provide the LIDAR data of each LIDAR frame as a 3D point cloud. The amount of data in such a 3D point cloud can be rather extensive, e.g., amounting to 50 000 points or more. Further, a rendering of such a 2D representation of a 3D point cloud constituting a LIDAR frame typically requires a relatively high amount of processing power. Hence, there is a need in reducing the amount of data representing a LIDAR frame and/or in reducing the amount of processing power needed for rendering a 2D representation of a LIDAR frame.

The inventors of the present invention have realized that the amount of data representing a LIDAR frame and/or the amount of processing power needed for rendering a 2D representation of a LIDAR frame can be reduced by fitting a line to a portion of the points in the 3D point cloud, and replacing the portion of points with a representation of the fitted line. The portion of points, to be replaced with the representation of the line, is to comprise three or more points, preferably ten or more points. This is implemented in the monitoring device 100 by configuring the circuitry 120 to execute a fitting function 132 and a data reduction function 134. The fitting function 132 is configured to fit a line to a portion of points in the 3D point cloud. The data reduction function 134 is configured to replace the portion of points with a representation of the fitted line. By this, the amount of data representing a LIDAR frame can be reduced. Having a reduced amount of data in the data representing a LIDAR frame will also reduce the processing power needed for rendering a 2D representation of a LIDAR frame. This since less data is needed to be rendered into the 2D representation, i.e., an image representing the LIDAR data. Preferably, the fitting of a line to a portion of the points in the 3D point cloud, and replacing the portion of points with a representation of the fitted line is repeated for a plurality of portions of points in the 3D point cloud.

The fitting function 132 may be configured to fit the line in the form of a straight line to the portion of points. In such case the fitted line is to be represented as a position vector and a length. Hence, the points in the portion of points will be replaced with a line segment represented as a position vector and a length, i.e., by an amount of data being the same or very similar as the amount of data for two points. Hence, when the portion of points replaced by the representation of the fitted line comprises three or more points the above discussed fitting and replacing will result in a reduction of the amount of data.

Alternatively, the fitting function 132 may be configured to fit the line in the form of a spline to the portion of points. In such case the fitted line is to be represented as a spline function. Similarly, to fitting the points to a straight line, in this case, the points are fitted to a polynomial function, also denoted as curve fitting in some circumstances of computer graphics, that can be easily represented with a few coefficients.

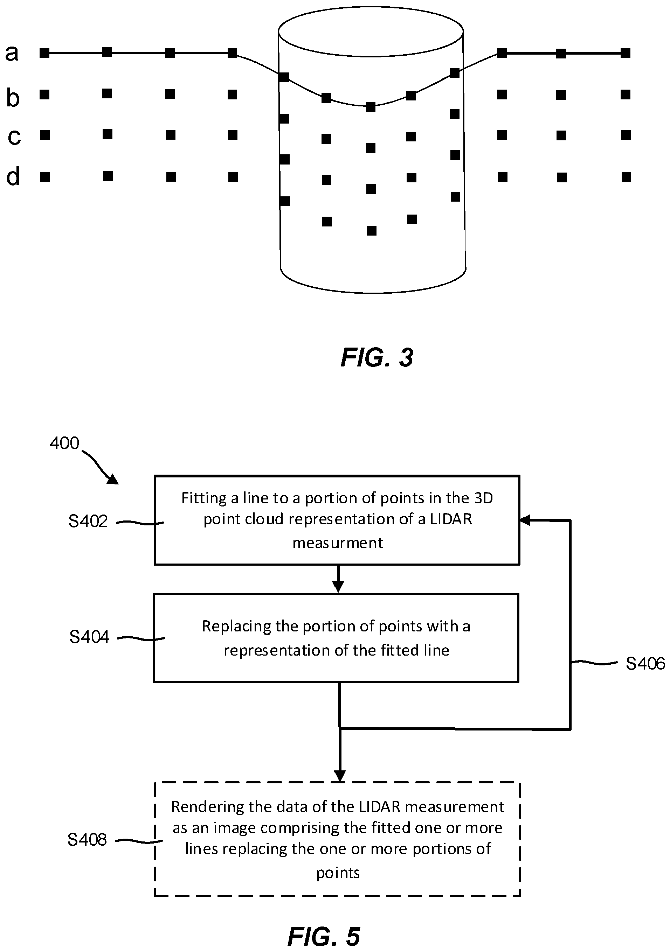

Replacing portions of points with a straight line and a spline, respectively, will be schematically discussed in connection with Fig. 3. Fig. 3 schematically illustrates four scan lines in a LIDA frame. The scan lines are referred to as a, b, d, and d in the figure. For the upper more scan line, denoted a, a first straight line is fit to the four first points of the scan line. Hence, the four first points of scan line a can be replaced with a representation of a straight line starting at the first point and ending at the fourth point. The fourth to the tenth point in scan line a can be fitted with a spline. A representation of the spline can hence replace these points. Finally, the tenth to twelfth points in scan line a can be fitted with another straight line. Hence, the tenth to twelfth points of scan line a can be replaced with a representation of a straight line starting at the first point and ending at the fourth point Similar fittings can be made to the points in the other scan lines b, c and d as well. It is to be noted that this is a highly schematic illustration of the present invention, typically the number of points of a single portion of points is ten or more points sometimes even 100 or more points.

The choice of type of line fitting when replacing a portion of points with a line can be made from analysis of the points in the 3D point cloud. Especially, points belonging to a specific line sweep of the LIDAR frame can be analyzed. The fitting may be made by checking 3 or more points to see if they fit in an nth level polynomial. The level n can be set to 3 or higher. A level 3 polynomial can be expressed as ax³+bx²+cx+d. A straight line is just a special case of a cubic (or higher) interpolation where some of the coefficients are zero. In the example of the level 3 polynomial, if a and b are zero a straight line is fitted. Hence, straight lines do not need to be handled separately, they will fall under the same fitting algorithm. Generally other types of splines can also be used as long as a straight line is a special case of the interpolation algorithm.

Further, a distance between an interpolated value along the spline with the next data point in three dimensions (√(x²+y²+z²)) may be determined. If the distance is greater than a set distance threshold and a number of outliers are below a set outlier value, those points are fitted as they are, and the spline is set to continue beyond these points. If the number of outliers is greater than the set outlier value, the fitting of the spline is finalized and a new fitting is initiated for the coming points in the line sweep. The outlier value may be set to three. This gives a good spline fitting. The distance threshold can be manipulate depending on the situation. As a rule of thumb, the outlier value and the distance threshold can be set such that a maximum of 5% of the points are outliers. Hence, a spline that matches 95% of the points is fitted.

The circuitry 120 may further be configured to execute a selection function 131. The selection function 131 is configured to select the points of a portion of points. The selection function 131 may be configured to select the points of a portion of points as being points belonging to a specific scan line in a raster scan of a LIDAR frame. This can be implemented by getting information from the LIDAR unit 112. Typically, the LIDAR unit 112 is set to scan to get many measurements horizontally. Then an internal mirror component is controlled mechanically to adjust scanning line vertically so that the LIDAR unit 112 can continue scanning the next line. The selection function 131 can be set to receive a signal from the internal mirror component and use this signal to select points belonging to a specific scan line. Typically, points belonging to a specific scan line in a raster scan of a LIDAR frame representing a flat surface will be arranged along a straight line. Hence, by selecting points of a portion of points as being points belonging to a specific scan line relatively long straight lines may be fitted to the points.

The circuitry 120 may further be configured to execute an image rendering function 136. The image rendering function 136 is configured to render an image, i.e., a 2D representation, of the data representing a LIDAR frame. Especially, the image rendering function 136 is configured to be executed after the execution of the fitting function 132 and the data reduction function 134. Preferably, the image rendering function 136 is configured to be executed after the fitting function 132 and the data reduction function 134 have been scanning through all the data representing a LIDAR frame in order to reduce the amount of data in the data representing a LIDAR frame.

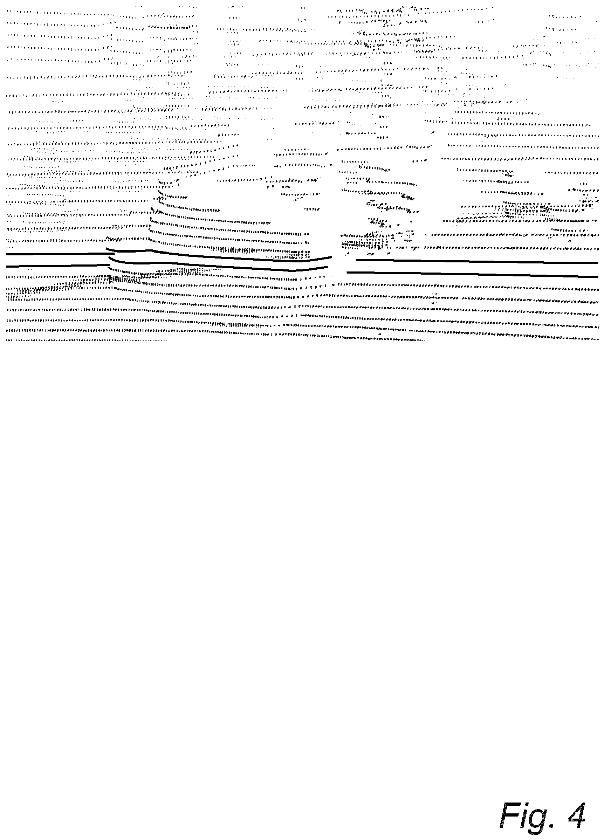

An example of such a rendered image is illustrated in Fig. 4. is a 2D representation of a portion of the scene in Fig. 2B Fig. 4 is a 2D representation of a portion of the scene illustrated in Fig. 2B but after the fitting function 132 and the data reduction function 134 have been scanning through a portion of the data. In Fig.4 24 scan lines are represented. For the 18 and 19 scan lines the fitting function 132 and the data reduction function 134 have been applied. As a result, portions of the points have been replaced with line representations. It is understood that also the rest of the scan lines may be analyzed by the fitting function 132 and the data reduction function 134 so that also the data points in these scan lines can be replaced with lines fitting the points of the respective scan line.

The monitoring device 100 may comprise an encoder 140. The encoder 140 is configured to encoder a video, represented by a plurality of images rendered by the image rendering function 136, into an encoded video stream. Typically, the encoder 140 is configured to encode using a standardized encoding codec such as, H.264/MPEG-4 AVC, H.265/HEVC, VP8, VP9 or AV1.

The monitoring device 100 may comprise a transceiver 150 through which the monitoring device 100 is configured to communication with other devices or services. For example, the transceiver 150 may be configured to send the encoded video stream to one or more other devices and/or services, such as a video managing server. The transceiver 150 may be configured to send/receive data over a data communication network configured to carry data between different devices. Typically, the data is digital data.

In connection with Fig. 5 a method 400 for reducing an amount of data representing a LIDAR measurement will be discussed. The method 400 is preferably executed by a processor. Hence, it may be said that the method is a computerimplemented method. Some of all the steps of the method 400 may be performed by the monitoring device 100 described above. However, it is equally realized that some or all of the steps of the method 400 may be performed by one or more other devices having similar functionality. The method 400 comprises the following steps. The steps may be performed in any suitable order.

Providing the LIDAR measurement as a 3D point cloud representation. A LIDAR unit is typically configured to output an array of points, in form of x, y, z coordinates. Such an array of points can be set seen as the 3D point cloud representation. A LIDAR unit may additionally also be configured to output additional parameters such as reflectance and/or scan count.

Fitting S402 a line to a portion of points in the 3D point cloud. The portion of points comprises three or more points. Preferably, the portion of points comprises ten or more points. Fitting S402 the line may comprise fitting a straight line to the portion of points. In such case, the fitted line may be represented in the form of a position vector and a length. Alternatively, fitting S402 the line may comprise fitting a spline to the portion of points. In such case, the fitted line may be represented in the form of a spline function. Fitting S402 a line to a portion of points in the 3D point cloud may comprise selecting the points of the portion of points as belonging to a specific scan line of a rater scan performed during the LIDAR measurement.

Replacing S404 the portion of points with a representation of the fitted line. By such replacing the amount of data in the LIDAR measurement may be reduced. In case the fitted line is a straight line, the representation of the fitted line may be in the form of a position vector and a length. In case the fitted line is a spline, the representation of the fitted line may be in the form of a spline function describing the spline.

The steps of fitting S402 and replacing S404 may be repeated S406 for a plurality of portions of points. Preferably, the steps of fitting S402 and replacing S404 are repeated until all points within a data set representing a scan of LIDAR data for a full LIDAR frame has been processed.

After the steps of fitting S402 and replacing S404 have been performed, preferably repeated until all points within a data set representing a scan of LIDAR data for a full LIDAR frame has been processed, the method may further comprise rendering S408 the reduced data of the light LIDAR measurement as an image comprising the fitted one or more lines.

The method 400 may then be repeated for new LIDAR frames in order to render new images each representing a specific LIDAR frame.

After having rendered a plurality of images representing LIDAR frames, the method 400 may comprise encoding the images representing the LIDAR frames into an encoded video stream. The encoding may be made using a standardized encoding codec such as, H.264/MPEG-4 AVC, H.265/HEVC, VP8, VP9 or AV1.

The person skilled in the art realizes that the present invention by no means is limited to what is explicitly described above. On the contrary, many modifications and variations are possible within the scope of the appended claims.

For example, the monitoring device 100 may comprise a camera unit 114. The camera unit 114 is configured to capture a video. The camera 114 may have a same field-of-view as the LIDAR unit 112. This is the case illustrated in Fig. 1. However, it is to be understood that camera unit 114 and the LIDAR unit 112 may have different fields of view. However, preferably, the field-of-view of the camera unit 114 is overlapping with the field-of-view of the LIDAR unit 112.

The visual data captured by the camera unit and the 2D representation of the LIDAR measurement may be fused together into a fused image illustrating both visual and LIDAR information. A plurality of such fused images may be encoded as a video stream. The encoding may be made using a standardized encoding codec such as, H.264/MPEG-4 AVC, H.265/HEVC, VP8, VP9 or AV1.

Additionally, variations can be understood and effected by the skilled person in practicing the claimed invention, from a study of the drawings, the disclosure, and the appended claims.

## Claims

1. A method for reducing an amount of data representing a light detection and ranging, LIDAR, measurement, the method comprising:
providing the LIDAR measurement as a 3D point cloud representation;
fitting (S402) a line to a portion of points in the 3D point cloud; and
replacing (S404) the portion of points with a representation of the fitted line, thereby reducing the amount of data representing the LIDAR measurement.

2. The method according to claim 1, wherein the portion of points comprises three or more points, preferably ten or more points.

3. The method according to claim 1 or 2, wherein fitting (S402) the line comprises fitting a straight line to the portion of points, wherein the representation of the fitted line is in the form of a position vector and a length.

4. The method according to claim 1 or 2, wherein fitting (S402) the line comprises fitting a spline to the portion of points, wherein the representation of the fitted line is in the form of a spline function.

5. The method according to any one of claims 1-4, further comprising, in connection with the fitting (S402) a line to a portion of points in the 3D point cloud, selecting the points of the portion of points as belonging to a specific scan line of a rater scan performed during the LIDAR measurement.

6. The method according to any one of claims 1-5, further comprising repeating (S406) the steps of fitting (S402) a line to a portion of points in the 3D point cloud and replacing (S404) the portion of points with a representation of the fitted line, for a plurality of portions of points.

7. The method according to any one of claims 1-6, further comprising, after executing steps the steps of fitting (S402) a line to a portion of points in the 3D point cloud and replacing (S404) the portion of points with a representation of the fitted line one or more times, rendering (S408) the reduced data representing the light LIDAR measurement as an image comprising the fitted one or more lines.

8. A non-transitory computer-readable storage medium having stored thereon instructions for implementing the method according to any one of claims 1-8, when executed on a device having processing capabilities.

9. A monitoring device (100) comprising:
a light detection and ranging, LIDAR, unit (112) configured to measure LIDAR data represented as a 3D point cloud; and
circuitry (120) configured to execute:
a fitting function (132) configured to fit a line to a portion of points in the 3D point cloud, and
data reduction function (134) configured to replace the portion of points with a representation of the fitted line, thereby reducing an amount of data in the LIDAR data.

10. The monitoring device (100) according to claim 9, wherein the circuitry (120) is further configured to execute an image rendering function (136) configured to render an image based on the LIDAR data after execution of the fitting function (132) and the data reduction function (134).

11. The monitoring device (100) according to claim 9 or 10, wherein the fitting function (132) is configured to fit a straight line to the portion of points in the 3D point cloud, and wherein the data reduction function (134) is configured to replace the portion of points with a position vector and a length.

12. The monitoring device (100) according to claim 9 or 10, wherein the fitting function (132) is configured to fit a spline to the portion of points in the 3D point cloud, and wherein the data reduction function (134) is configured to replace the portion of points with a representation of the fitted line in the form of a spline function.

13. The monitoring device (100) according to any one of claims 9-12, wherein the circuitry (120) is further configured to execute a selection function (131) configured to select the points of a portion of points as being points belonging to a specific scan line in a raster scan of a LIDAR frame.

14. The monitoring device (100) according to any one of claims 9-13, further comprising an encoder (140) configured to encoder a video, represented by a plurality of images rendered by the image rendering function (136), into an encoded video stream.

15. The monitoring device (100) according to any one of claims 10-14, further comprising a camera unit (114) configured to capture a video, the camera unit (114) having a field-of-view overlapping with a field-of-view for the LIDAR unit (112), wherein the image rendering function (136) is configured to fuse data from the camera unit (114) and the LIDAR unit (112) into a fused LIDAR/visual image representation.
